# EUROPEAN PATENT SPECIFICATION

(11) **EP 2 428 013 B1**
(45) Date of publication and mention of the grant of the patent: **08.05.2013**
(21) Application number: 09788587.5
(22) Date of filing: 29.06.2009
(51) Int. Cl.: H04L 29/06, H04N 7/173

(54) **SESSION PUSH TRANSFER**
SITZUNGS-PUSH-TRANSFER
TRANSFERT DE PUSH DE SESSION

(30) Priority: 04.05.2009 US 175216 P
(43) Date of publication of application: 14.03.2012
(73) Proprietor: Telefonaktiebolaget LM Ericsson (publ), 164 83 Stockholm (SE)
(72) Inventor: LINDQUVIST, Jan Erik, S-125 35 Älvsjö (SE); ANDERSSON, Ola, 16354 Spånga (SE)
(74) Representative: Egrelius, Fredrik
(86) International application number: PCT/SE2009/050828
(87) International publication number: WO 2010/128916

(56) References cited:
- EP-A- 1 330 098
- WO-A-2006/000624

## Description

### TECHNICAL FIELD

The present invention relates to a method for a first UE (User Equipment) of enabling a selected UE to initiate an IMS(Internet Protocol Multimedia Sub-system)-based media session, a method for an Application Server of enabling a selected UE to initiate an IMS-based media session, using session push information from a first UE, as well as to a UE and an Application Server.

### BACKGROUND

An end-user is able to access different types of IMS (Internet Protocol Multimedia Sub-system)-based services, e.g. IPTV (Internet Protocol Television), VoD (Video-on-Demand), CoD (Content-on-Demand) or music from different types of UEs (User Equipment), such as e.g. a TV, a PC (Personal Computer) or a mobile phone provided with suitable functionality, and to watch or listen to a media session belonging to the specific service.

It is valuable for the end-user to be able to move or copy a specific media session from a first UE to a target UE sharing the same IMS subscription, e.g. from a PC located in the bedroom to a TV located in the living-room, and in case the media session is moved to another UE, the first UE will terminate the session after copying the session to the other UE. Further, it would be advantageous for the end-user to be able to use his first UE to enable another UE to initiate a specific media session, even when the first UE is not running the media session.

A duplication of a media session is partly addressed in the DLNA (Digital Living Network Alliance) standard, which is used by consumer electronics manufacturers to allow user equipments e.g. within a home network, to share their content with each other without any complicated configuration process.

In patent document EP1330098A a user can log on a terminal in oder to start a WEB session. The user can then transfer the session another terminal. A central server keeps a personal profile of the user in which a list of terminal devices available to the user is stored. The user is presented with the list of terminal devices and chooses one to transfer the session to.

Further, existing IMS based messaging solutions, e.g. the PGM (Presence & Group Management) from Ericsson includes features that partly address session transfer scenarios, as well as the 3GPP.

However, the above-described conventional solutions involve several drawbacks, e.g. that the DLNA solution requires that the UEs conform to the DLNA standard. A large number of existing user equipments do not conform to the DLNA, and thus do not have the means to copy of duplicate a media session to another user equipment. Furthermore, the DLNA actually does not address the services from a service provider, e.g. an IPTV service, but focuses on pictures and streaming media within the home environment only.

Additionally, the above-mentioned IMS-based messaging solutions allow a sharing of media, at least photos, between users, such that a first user includes a photo in a chat session with a second user. However, they do not allow any sharing of streamed video or IPTV sessions, or any sharing with other user equipments within a home network belonging to the same IMS subscription.

Thus, it still presents a problem to allow an end-user to move or copy an IMS-based media session from a first UE to a target UE belonging to the same IMS subscription, e.g. within a home network, independently of whether the first UE is actually running the media session or not.

### SUMMARY

The object of the present invention is to address the problem outlined above, and this object and others are achieved by the method and the arrangement according to the appended independent claims, and by the embodiments according to the dependent claims.

According to one aspect, the invention provides a method for a first UE of enabling a selected UE to initiate an IMS-based media session. The media session is controlled by an Application Server via an IMS Gateway and belongs to an IMS based service. Said first UE performs the following steps:
- Sending a subscribe message to the Application Server for registering to the IMS-based service;
- Receiving a notification from the Application Server of the other UEs that are registered to the IMS-based service under the same IMS subscription;
- Sending session push information to the Application Server to be forwarded to a selected UE of said other registered UEs, the session push information comprising the identity of said selected UE, and a content identifier associated with a media session belonging to said IMS-based service.

The UE may further perform the following additional steps of:
- Displaying the other UEs registered to the same IMS-based service;
- Receiving a user input selecting one of said other registered UEs.

According to a second aspect, the invention provides a method for an Application Server of enabling a selected UE to initiate an IMS-based media session, using session push information from a first UE. The media session is controlled by the Application Server via an IMS Gateway and belongs to an IMS-based service. Said Application Server performs the following steps:
- Receiving a subscribe message from the first UE for registering said first UE to an IMS-based service;
- Sending a notification to the first UE of the other UEs that are registered to said IMS-based service under the same IMS subscription;
- Receiving session push information from the first UE, the session push information comprising the identity of a selected UE of said other registered UEs, and a content identifier associated with a media session belonging to said IMS-based service; and
- Forwarding said session push information to the selected UE.

The Application Server may further forward the session push information to the selected UE by forking the information to all the registered UEs, for each UE to verify if it is an intended recipient or not.

According to a third aspect, the invention provides a UE arranged to enable a selected UE to initiate an IMS-based media session. The media session is controlled by an Application Server via an IMS Gateway, and belongs to an IMS-based service. The UE comprises:
- A registering unit for sending a subscribe message to the Application Server for registering to an IMS-based service;
- A notification receiving unit for receiving a notification from the Application Server of other UEs registered to said IMS-based service under the same IMS subscription;
- A session push unit for sending session push information to the Application Server, to be forwarded to a selected UE of said other registered UEs, the session push information comprising the identity of said selected UE and a content identifier associated with a media session belonging to said IMS-based service.

The UE may further be provided with a selection device for displaying the other UEs registered to said IMS-based service, and for receiving a user input for selecting one of said registered UEs as a target for a session push.

According to a fourth aspect, the invention provides an Application Server arranged to enable a selected UE to initiate an IMS-based media session, using session push information from a first UE. The media session is controlled by the Application Server via an IMS Gateway, and belongs to an IMS-based service. The Application Server comprises:
- A registering receiving unit for receiving a subscribe message from the first UE for registering said first UE to an IMS-based service;
- A notification unit for sending a notification to the first UE of the other UEs that are registered to said IMS-based service under the same IMS subscription;
- A session push forwarding unit for receiving session push information from the first UE, said session push information comprising the identity of a selected UE of the other registered UEs, and a content identifier associated with a media session belonging to said IMS-based service, the unit further arranged to forward said session push information to said selected UE.

Additionally, the media session may be an IPTV session, and said content identifier corresponding to the identity of a television channel, or to an identity of a Video-on-Demand or a Content-on-Demand.

The session push information may further comprise information related to the position in the media session, and/or codec information.

An advantage with the present invention is that an IMS-based media session can be pushed by a first UE to a selected target UE based on existing standards. By the first UE transferring session push information comprising a content identifier, the receiving target UE is able to initiate a new session, independently of whether the first UE is running the media session or not.

### BRIEF DESCRIPTION OF THE DRAWINGS

The present invention will now be described in more detail, and with reference to the accompanying drawings, in which:
- Figure 1 illustrates schematically a device discovery;
- Figure 2 is a SIP signalling diagram illustrating device discovery;
- Figure 3 is a signalling diagram illustrating a SIP Session Push according to an embodiment of the invention;
- Figure 4 is a flow diagram showing an exemplary device discovery and session push performed by a UE, according to this invention
- Figure 5 is a flow diagram showing an exemplary device discovery and session push performed by a Application Server, according to this invention;
- Figure 6 illustrated schematically an exemplary UE, according to this invention;
- Figure 7 illustrated schematically an exemplary Application Serve, according to this invention;

### DETAILED DESCRIPTION

In the following description, the invention will be described in more detail with reference to certain embodiments and to accompanying drawings. For purposes of explanation and not limitation, specific details are set forth, such as particular scenarios, techniques, etc., in order to provide a thorough understanding of the present invention. However, it is apparent to one skilled in the art that the present invention may be practised in other embodiments that depart from these specific details.

Moreover, those skilled in the art will appreciate that the functions and means explained herein below may be implemented using software functioning in conjunction with a programmed microprocessor or general purpose computer, and/or using an application specific integrated circuit (ASIC). It will also be appreciated that while the current invention is primarily described in the form of methods and devices, the invention may also be embodied in a computer program product as well as in a system comprising a computer processor and a memory coupled to the processor, wherein the memory is encoded with one or more programs that may perform the functions disclosed herein.

A basic concept according to this invention is that a first UE (User Equipment) starts a device discovery procedure by registering to an IMS-based service, e.g. an IPTV service, using a subscribe signalling procedure with the Application server, and the Application server responds by notifying the UE of the other UEs registered to the service under the same IMS subscription. Thereby, the first UE can enable a selected UE of the other registered UEs to initiate a specific media session, by sending a session push comprising at least a content identifier and the identity of a selected UE to the Application Server, to be forwarded to the selected UE, preferably by the Application Server forking a message to all the registered UEs.

Thus, the present invention defines a way to use the underlying IMS infrastructure to transfer session push information between different UEs. The transfer utilizes standardized mechanisms from e.g. the Open IPTV Forum (OIPF) and the TISPAN, which are extended to enable the session push.

Thus, in order to be able to push a session to another UE, the first UE initiates a device discovery procedure with the Application Server in order to establish the identity of the other UEs that are on-line and registered to the service. Naturally, it is also required that the UEs are registered under the same IMS subscription. When the end-user knows the identity of the other available UEs, he/she is able to select any of them as target UE for a session push.

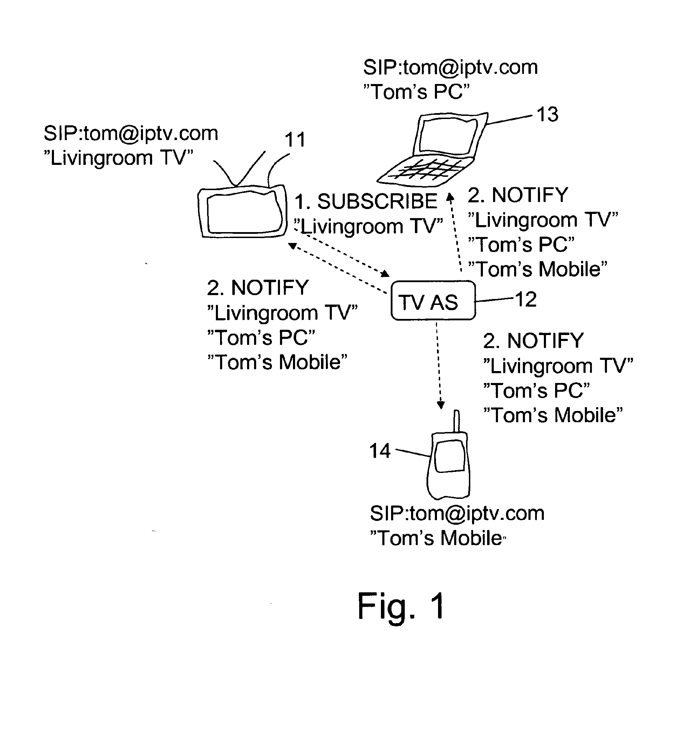

An exemplary device discovery procedure when a UE joins an IMS-based IPTV service is illustrated in figure 1. A first UE 11, i.e. a living room TV, registers to the service using a SUBSCRIBE/NOTIFY signalling sequence with the TV AS 12, (IPTV Application Server) providing the service. In order for a specific UE to be capable of participating in a session transfer, it must recognize an extension to the TISPAN standardized IPTV subscription dialogue. This extension provides the TV AS, in a SUBSCRIBE, in step 1, with the identity of a registering UE, and allows the TV AS to inform the UE, in a NOTIFY, in step 2, of all other registered IPTV service-capable UEs that are currently available to the end-user. The SUBSCRIBE payload is preferably further extended with information indicating the UEs preferred display name, e.g. "Livingroom TV", as indicated in the figure 1.

Thus, as a response to the SUBSCRIBE received from the first UE 11 ("Livingroom TV"), the TV AS 12 informs the UE 11 of the other registered UEs, i.e. "Toms PC" 13 and "Tom's Mobile" 14, in the NOTIFY since the NOTIFY payload is extended with information indicating all the registered UEs of the same subscription. In step 2, the TV AS 12 also sends a NOTIFY to the other registered UEs indicating all the registered UEs. Thereafter, each update, e.g. if an end-user logs out from any of the UEs or if another UE sends a SUBSCRIBE, will result in a new NOTIFY being sent to all the registered UEs.

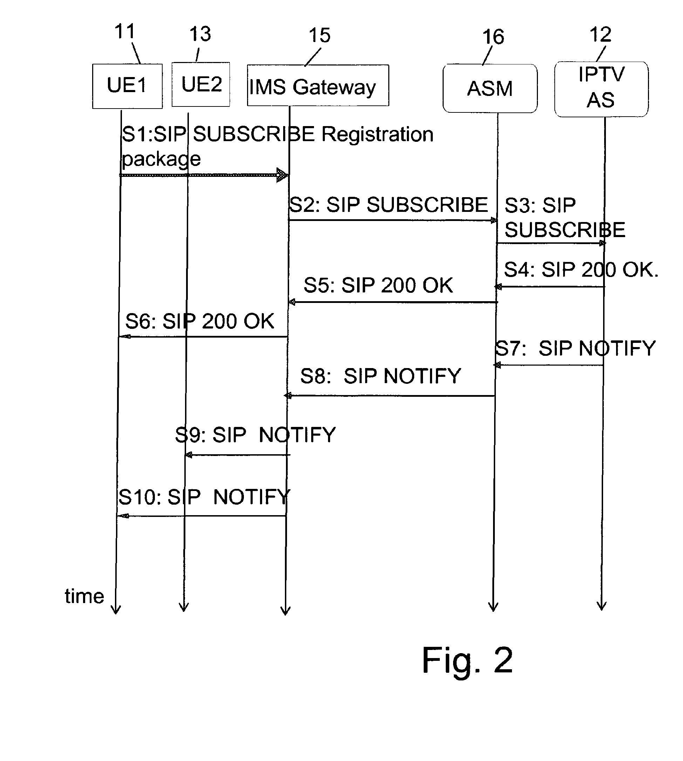

Figure 2 is a SIP signalling diagram further illustrating the main steps of the above-described exemplary dynamic discovery of UEs registered to the same IPTV service. In signal S1, the UE1 sends a SIP SUBSCRIBE Registration package to the IMS Gateway 15, destined to the IPTV Application server 12. In signal S2, the IMS GW forwards the SIP SUBSCRIBE to the ASM 16 (Authentication and Session manager), and the ASM forwards the SIP SUBSCRIBE to the IPTV Application server, in signal S3. Next, in signal S4, the IPTV Application server returns a SIP 200 OK to the ASM, and the ASM forwards the SIP 200 OK to the IMS GW, in signal S5, which sends the SIP 200 OK response to the UE1, in signal S6. In signal S7, the IPTV Application Server generates a SIP NOTIFY that includes all UEs registered under the same IPTV service as the originator of the procedure, i.e. UE1 and UE2, and sends the SIP NOTIFY to the ASM. In signal S8, the ASM forwards the SIP NOTIFY to the IMS GW, which in turn, forwards thee SIP NOTIFY to both the registered UEs, i.e. UE1 and UE2, in signals S9 and S10.

In order for a first UE to transfer session push information to another UE, the UE is preferably provided with means for displaying the available UEs, and for selecting a UE for receiving the session push information, e.g. a menu option for "session push", in which the available registered UEs are displayed, and the end-user is able to input a selection of one of the displayed UEs for a session push.

When a session push information transfer is initiated, e.g. by the UE receiving an input of a selected UE from an end-user, the UE sends a SIP request, i.e. a SIP REFER or SIP MESSAGE, to the TV AS comprising the necessary information to perform a session push. The session push information comprises a reference to the media session, i.e. a content identifier, such as e.g. a television channel, as well as information regarding the media session for enabling the receiving UE to initiate the media session, such as e.g. a specific position in a stream of the media session, or information related to the codec.

Since the receiving UE should be able to invoke the service as if it is a new session, the UE has to be able to identify the content, e.g. by receiving the identity of the television channel, in case the media session is live TV. Further, in case of a transfer from e.g. a high definition TV to e.g. a mobile phone with QSVG quality, the receiving UE has to know which codec to use when setting up the session. Additionally, further information could be transferred, for example the position at which the content is viewed on the UE.

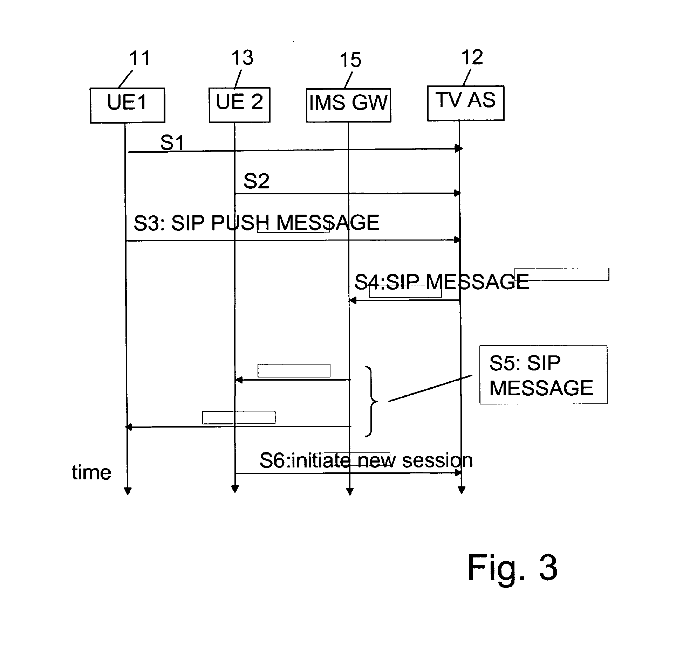

The session push information is transferred e.g. in a SIP REFER according to the 3GPPP, in which a Content Identifier is further included, or in a SIP MESSAGE, according to which the session push information is transferred in a specific **push** command. According to an exemplary embodiment of the invention, the push command is aligned with the existing **Notify, Record, SwitchToTM** and **SwitchToBC** TISPAN IPTV Commands, and comprises a structure called **IPTVSessionActionData,** which contains data that the receiving UE will need in order to initiate the pushed media session. When the TV AS receives a SIP MESSAGE comprising a **push** command, the TV AS may append or modify the payload, before it forwards the payload towards the receiving UE in a SIP MESSAGE Figure 3 is a signalling diagram illustrating an exemplary transfer of session push information from a first UE 11, UE1, to a second UE 13 (UE2) in a SIP MESSAGE. (The ASM is not illustrated in order to simplify the figure.) In the signals S1 and S2, the UE1 and UE2 sends the SUBSCRIBE signalling sequences that are required for registering to the TV Service, which is illustrated in part in the figure 1 and 2, and in the signal S3 the UE1 sends a SIP MESSAGE comprising a **push** command in the payload to the TV AS 12. The **push** command contains the necessary media session data required to enable another UE to initiate the same media session, and the data is wrapped in an **IPTVSessionActionData** structure, as defined below.

In signal S4, the TV AS sends a SIP MESSAGE to the IMS GW 15 with the same, or similar, data as in signal S3, but the TV AS may append or modify selected parts of the payload, if necessary, e.g. by including a VoD timestamp in order for UE2 to know where to start displaying the VoD. The TV AS may request this information from the media pump, i.e. a streaming server, or keep track of the user's playback positions within the TV AS itself. In signal S5, the IMS Gateway forks said SIP MESSAGE to all UEs, for each UE to verify whether it is the intended recipient of the MESSAGE or not. Finally, in signal S6, the UE2 initiates the media session pushed from UE1, using the session push information received via the IMS Gateway.

According to an exemplary embodiment, the above-mentioned new push command is defined as indicated in the schema below, wrapped in an **IPTVSessionActionData** structure. Only the relevant parts are show, and the highlighted parts are new, according to this invention:

### Push command:

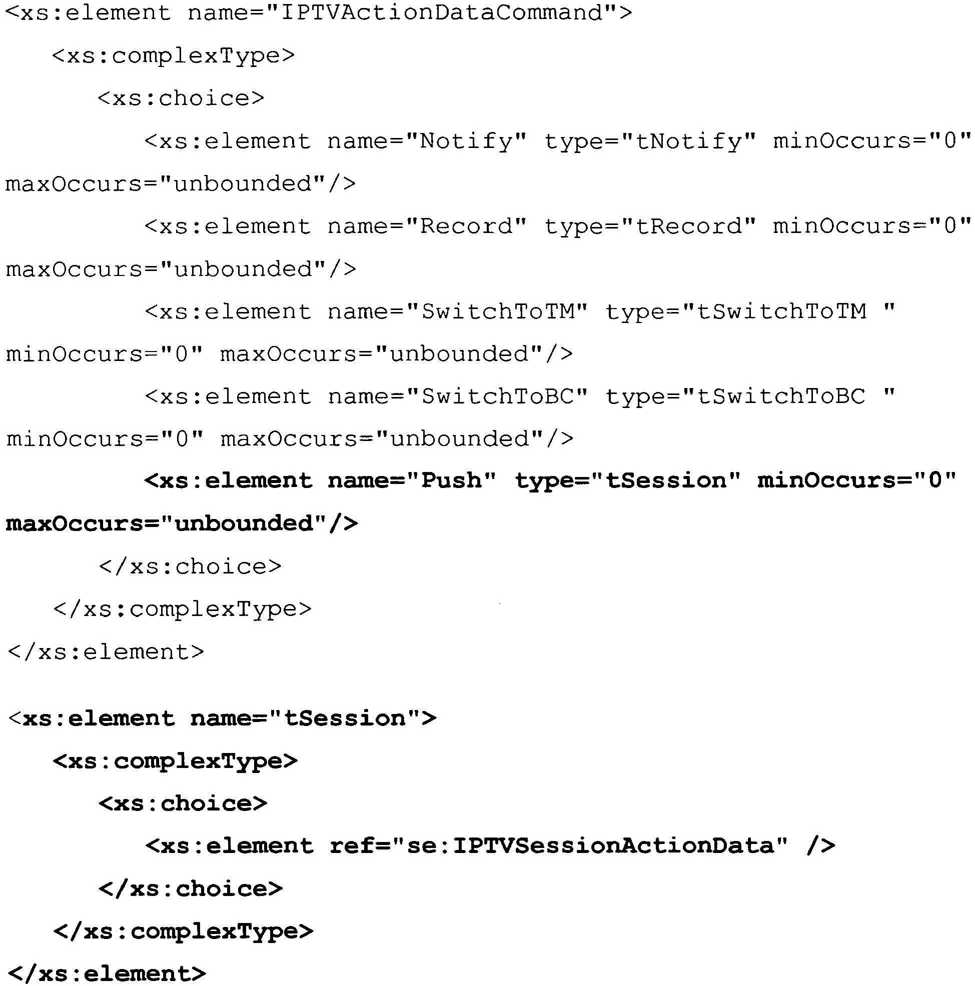

Further, theTISPAN defines service action data schemas for BC (broadcast), CoD (content on demand) and network recording related services. According to an exemplary embodiment, a new action data structure, **IPTVSessionActionData,** is defined in order to support session push, as indicated in the schema below, in which the TISPAN imports and extension elements are not indicated.

### IPTVSessionActionData:

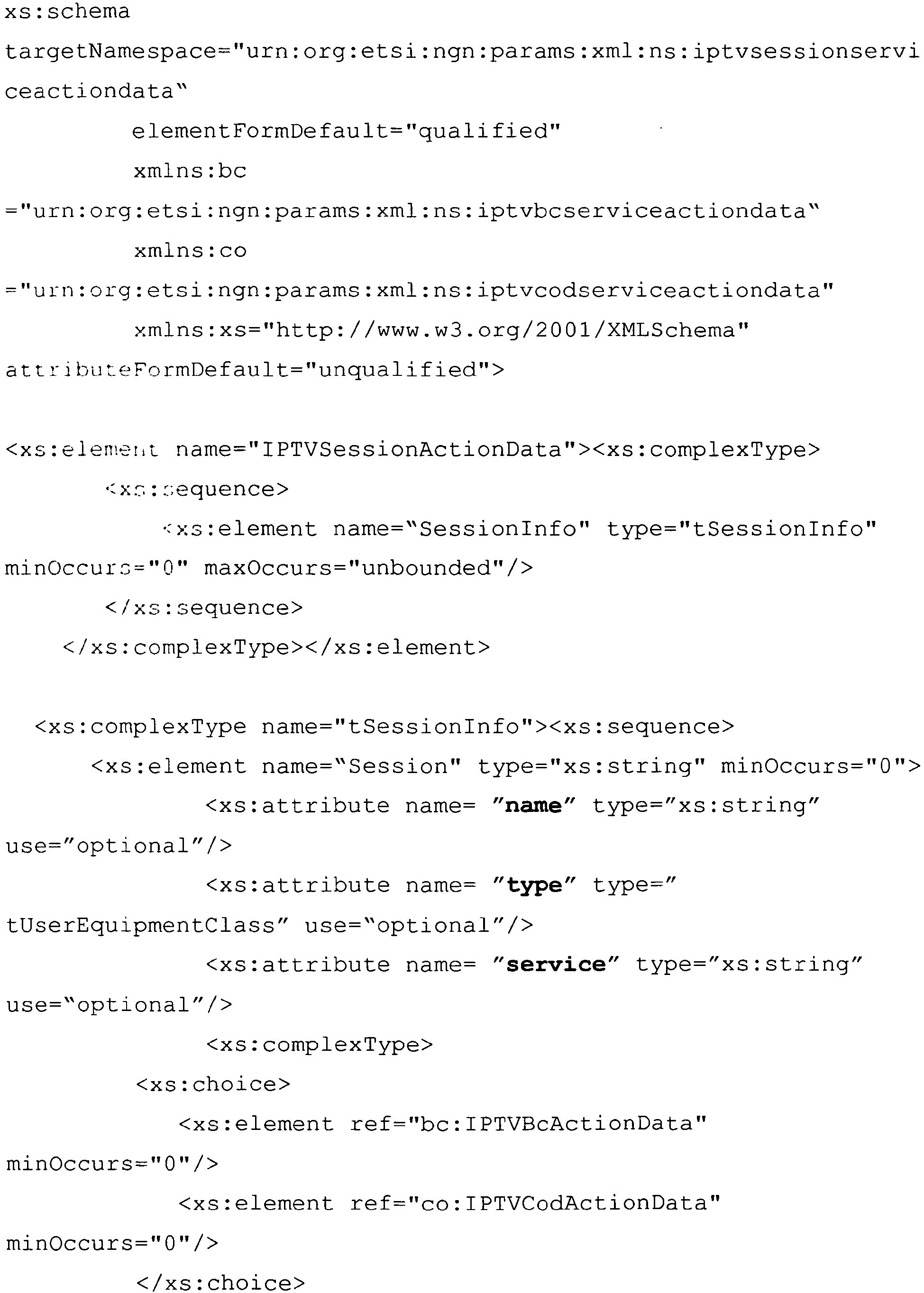

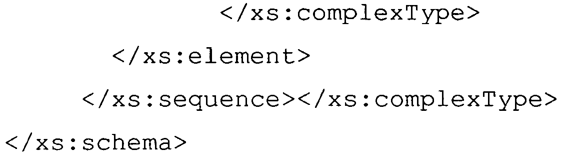

In the schema above, the highlighted term **"name"** refers to the name of the UE that runs the session, e.g. Livingroom TV; the highlighted term **"type"** refers to the type of UE that runs the session, e.g. a Set Top Box, a PC or an ordinary mobile phone-handset, and the highlighted term **"service"** refers to the type of service, e.g. BC (Broadcast) or VoD (Video-on-Demand).

This IPTVSessionActionData-structure is included and highlighted in the exemplary SIP MESSAGES for session push from UE A to TV AS, and from TV AS to UE B, as indicated in the two schemas below:

### Session Push SIP MESSAGE from UE A to TV AS:

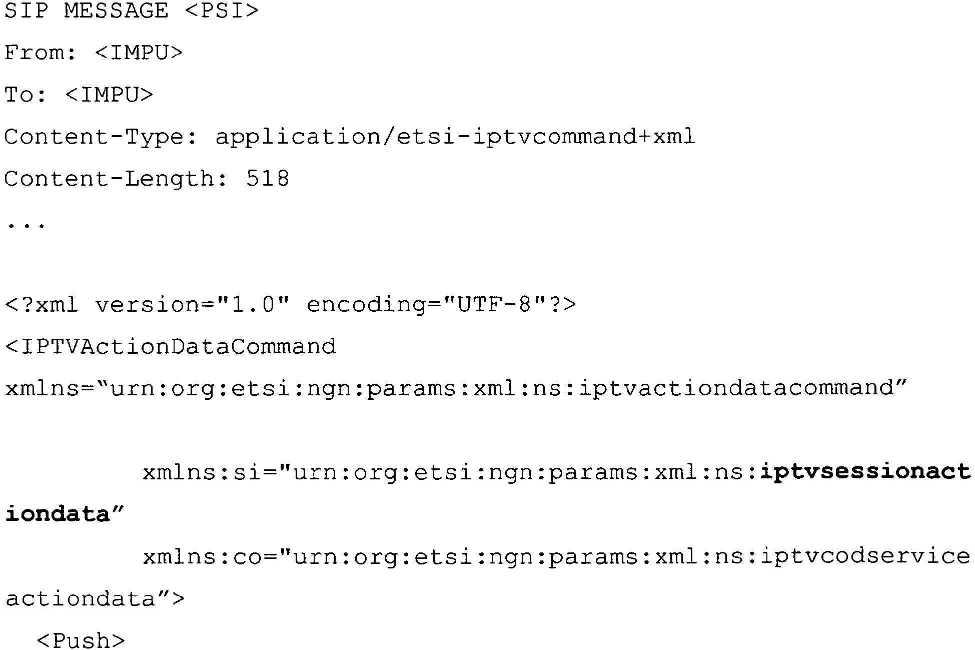

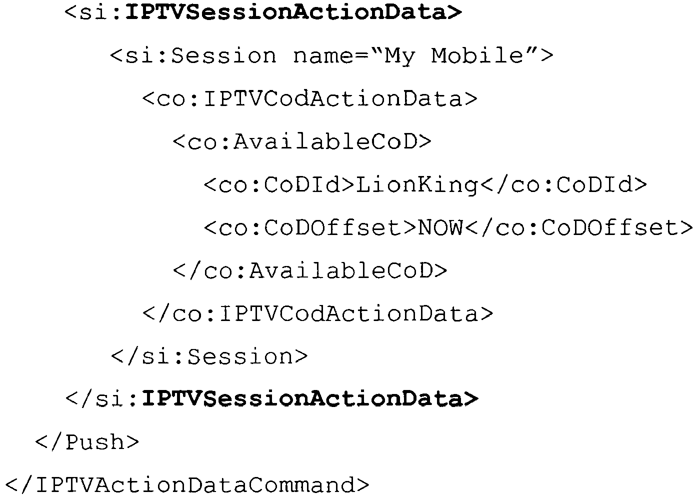

### Session push SIP MESSAGE from TV AS to UE B:

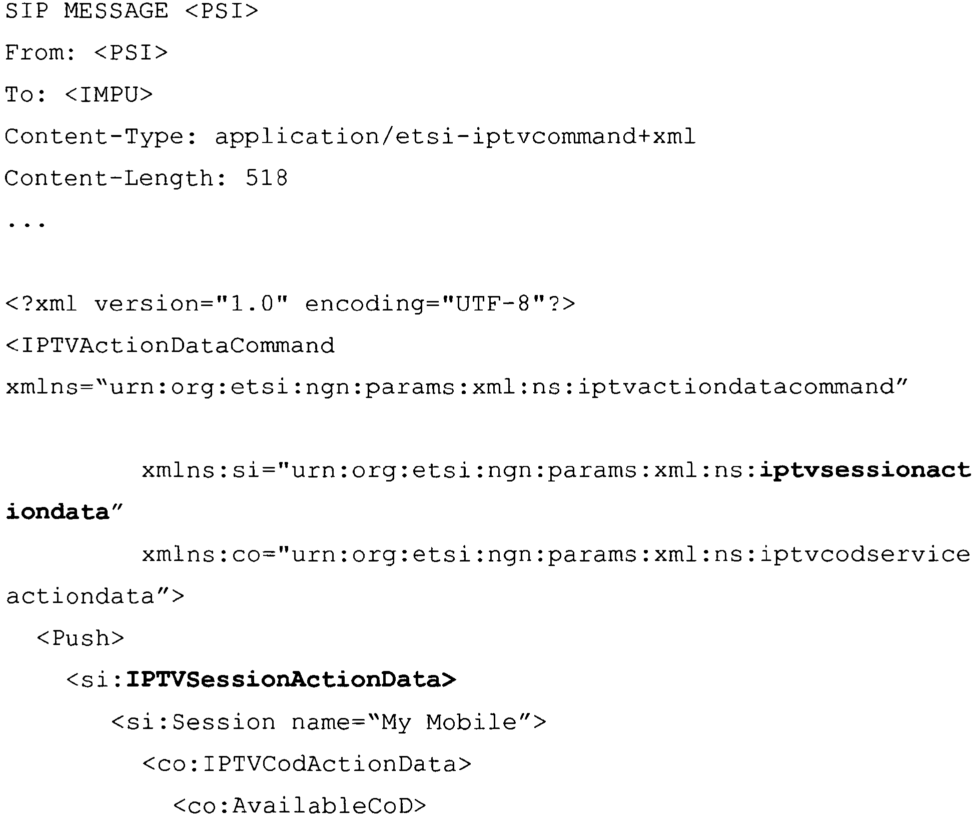

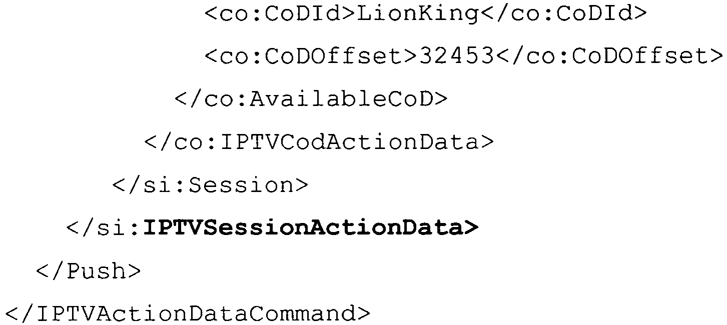

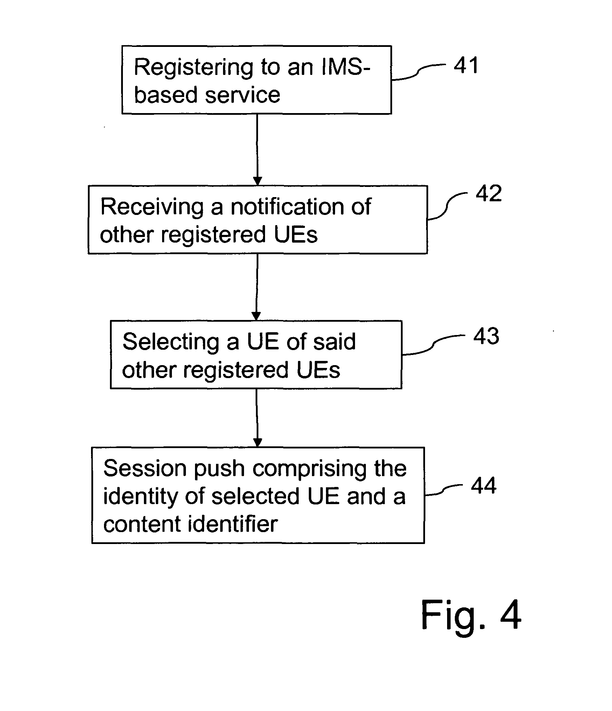

Figure 4 is a flow diagram illustrating the steps performed by a first UE in a session push procedure, according to the invention, in order to enable a selected UE to initiate a specific media session. In step 41, the UE is registered with an Application Server to an IMS-based service, such as IPTV, preferably by using a SIP SUBSCRIBE/NOTIFY-signalling. As a response to the SUBSCRIBE, the UE receives a notification from the Application Server, in step 42, the notification comprising the identity of the UEs registered to the IMS service, under the same IMS subscription. Preferably, the UE displays the available other UEs, such that the end-user is able to input a selection of a "target" UE, in step 43, which will initiate a session push, in step 44. The session push transfers information of the selected UE and a content identifier of a specific media session to the Application Server, to be forwarded to the selected UE, preferably by the Application Server sending the session push information to all available UEs, leaving to each UE to verify whether it is the intended recipient or not.

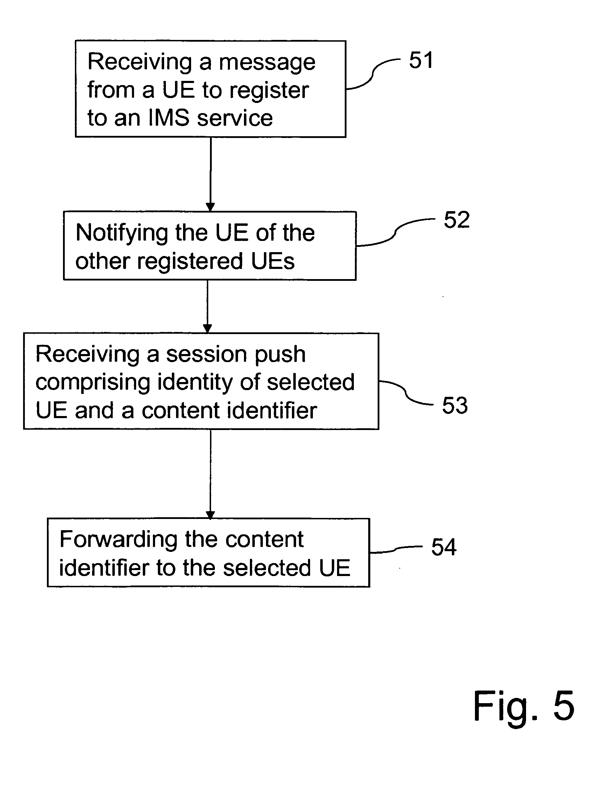

Figure 5 is a flow diagram illustrating the steps performed by the Application server in the session push procedure according to figure 4. The Application Server receives a message from the first UE in step 51, preferably a SIP SUBSCRIBE, to register the first UE to a specific IMS service. In step 52, the Application Server registers the UE to the service, and notifies the UE of all other registered UEs belonging to the same end-user, by sending a notification to all the registered UEs, the notification comprising the identity of the UEs registered to the IMS service and belonging to the same end-user, i.e. is registered under the same IMS subscription. Thereafter, the Application server receives a session push command from the first UE, the command comprising the identity of the selected "target" UE, as well as the content identity, in step 53. Finally, in step 54, the Application Server forwards the session push information to the selected UE, preferably by sending the session push information to all UEs registered to the service and belonging to the same end-user, leaving to each UE to verify whether it is the intended recipient or not.

The content identifier could be e.g. a television channel, or the identity of a Video-on-Demand, or a Content-on-demand. Further, the session push information could e.g. comprise position information or codec information.

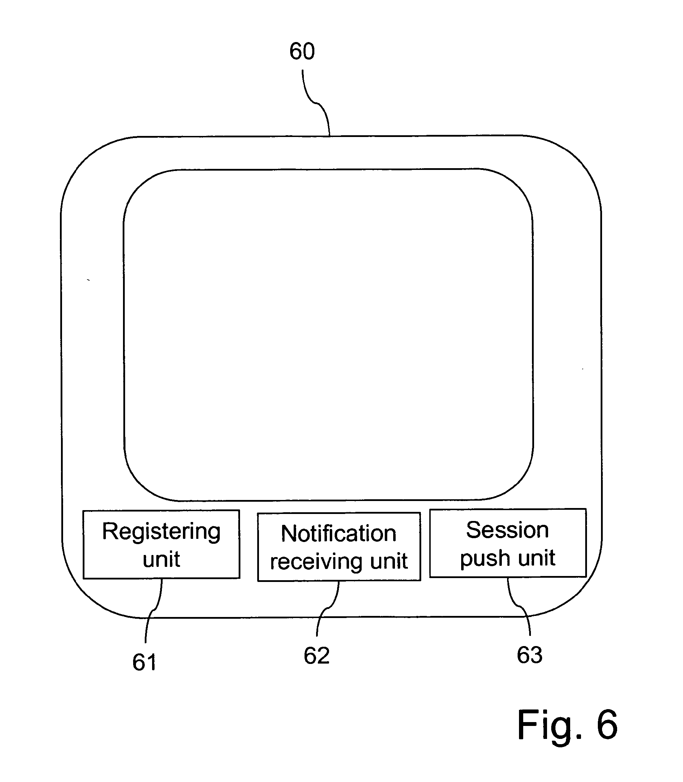

Figure 6 illustrates an exemplary User Equipment 60, i.e. a TV, arranged to enable a selected target UE to initiate an IMS-based media session, the UE provided with a Registering unit 61, a Notification receiving unit 62 and a Session push unit 63. The media session belongs to an IMS-based service, which is controlled by an Application Server 70 via an IMS Gateway. The Registering unit is configured to send a subscribe message to the Application Server for registering to an IMS-based service, and for initiating a discovery of other UEs registered under the same service. Further, the Notification receiving unit is configured to receive a notification from the Application Server of other UEs registered under said IMS-based service, and the Session push unit is configured to send session push information to the Application Server, to be forwarded to a selected UE of said other registered UEs.

According to a further embodiment, the user equipment is provided with a selection device configured to display the other UEs registered to said IMS-based service, and to receive a user input by means of which an end-user is able to select one of the registered UEs as a target device for a session push.

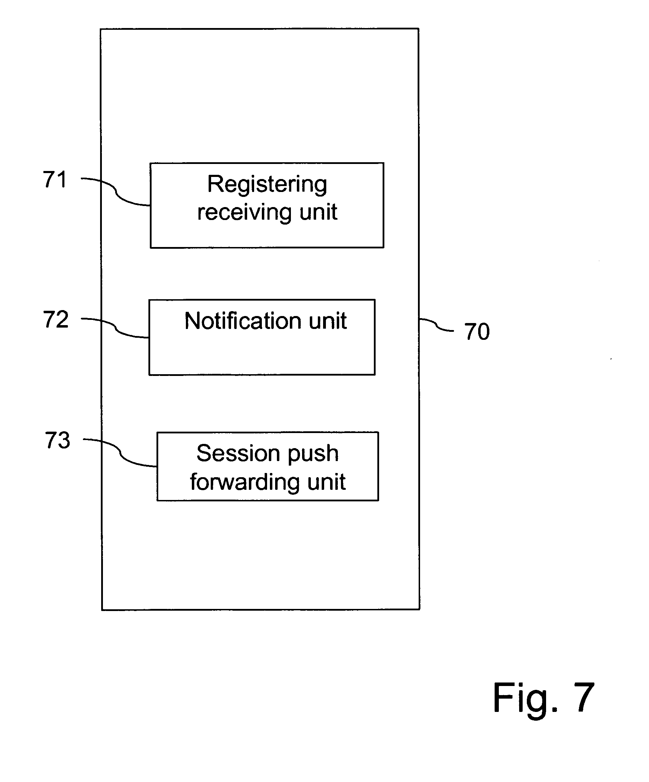

Figure 7 illustrates an exemplary Application Server 70 provided with a Registering receiving unit 71, a Notification unit 72 and a Session push forwarding unit 73, and the Application Server, is arranged to enable a selected UE to initiate an IMS-based media session, using session push information received from a first UE. The Registering receiving unit is configured to receive a subscribe message from the first UE to register the UE to an IMS-based service, and to discover any other UEs registered to the same service, under the same IMS subscription. Further, the notification unit is configured to send a notification to the first UE of the discovered UEs that are registered under said IMS-based service, and the session push forwarding unit is configured to receive session push information from the first UE, and to forward the information to the selected target UE.

Said session push information comprises at least the identity of a selected UE of the other registered UEs, and a content identifier associated with a media session belonging to said IMS-based service, but it could also comprise e.g. information regarding the viewed position in a VoD session and codec information.

It should be noted that the User Equipment and the Application Server illustrated in figure 6 and 7 may be implemented by physical or logical entities using software functioning in conjunction with a programmed microprocessor or general purpose computer, and/or using an application specific integrated circuit (ASIC).

The present invention enables a session push of a media session, e.g. an IPTV session, from a first UE to a selected target UE, based on existing standards. Since the first UE transfers session push information comprising a content identifier, the receiving target UE is able to initiate a new session, e.g. according to the existing Open IPTV Forum's sequences, even when the first UE is not running the media session.

Further, the above mentioned and described embodiments are only given as examples and should not be limiting to the present invention. Other solutions, uses, objectives, and functions within the scope of the invention as claimed in the accompanying patent claims should be apparent for the person skilled in the art.

### ABBREVIATIONS

- TV AS: Television Application Server
- VoD: Video on Demand
- BC: Broadcast
- UE: User Equipment, i.e. an end-user terminal, such as a mobile phone, a PC or a TV
- SIP: Session Initiation Protocol
- IMS: IP Multimedia Subsystem
- STB: Set Top Box
- DLNA: Digital Living Network Alliance
- PGM: Presence & Group Management

## Claims

1. A method for a first user equipment, UE, (11, 60) of enabling a selected UE (13) to initiate an IP Multimedia Subsystem, IMS-based media session, said media session controlled by an Application Server (12, 70) via an IMS Gateway (15) and belonging to an IMS based service, the method **characterized by** the first UE performing the following steps:
- Sending (41) a subscribe message to the Application Server (12) for registering to the IMS-based service;
- Receiving (42) a notification from the Application Server of the other UEs that are registered to the IMS-based service under the same IMS subscription;
- sending (44) session push information to the Application Server to the forwarded to a selected (43) UE of said other registers UEs, the session push information comprising the identity of said selected UE, and a content identifier associated with a media session belonging to said IMS-based service.

2. A method according to claim 1, **characterized by** the first UE (11) performing the following additional steps:
- Displaying the other UEs registered to the same IMS-based service;
- Receiving a user input selecting one of said other registered UEs.

3. A method according to claim 1 or 2, wherein the media session is an IPTV session, and said content identifier corresponds to the identity of a television channel.

4. A method according to claim 1 or 2, wherein said content identifier corresponds to an identity of a Video-on-Demand or a Content-on-Demand.

5. A method according to claim 4, wherein said session push information further comprises information related to a position in the media session.

6. A method according to any of the preceding claims, wherein said session push information further comprises codec information.

7. A method for an Application Server (12, 70) of enabling a selected User Equipment, UE, (13) to initiate an IP Multimedia Sybsystem, IMS-based media session, using session push information from a first UE (11, 60), said media session controlled by the Application Server (12) via an IMS Gateway (15) and belonging to an IMS-based service, the method **characterized by** the Application Server performing the following steps:
- Receiving (51) a subscribe message from the first UE (11) for registering said first UE to an IMS-based service;
- Sending (52) a notification to the first UE of the other UEs that are registered to said IMS-based service under the same IMS subscription;
- Receiving (53) session push information from the first UE, the session push information comprising the identity of a selected UE (13) of said other registered UEs, and a content identifier associated with a media session belonging to said IMS-based service; and
- Forwarding (54) said session push information to the selected UE.

8. A method according to claim 7, wherein the session push information is forwarded to the selected UE by a forking of the information to all the registered UEs, for each UE to verify if it is an intended recipient or not.

9. A method according to claim 7 or 8, wherein the media session is an IPTV session, and said content identifier corresponds to the identity of a television channel.

10. A method according to claim 7 or 8, wherein said content identifier corresponds to an identity of a Video-on-Demand or a Content-on-Demand.

11. A method according to claim 10, wherein said session push information further comprises information related to a position in the media session.

12. A method according to any of the claims 7 - 11, wherein said session push information further comprises codec information.

13. A User Equipment, UE, (60) arranged to enable a selected UE to initiate an IP Multimedia Subsystem, IMS-based media session, said media session controlled by an Application Server (70) via an IMS Gateway, and belonging to an IMS-based service, the UE **characterized in that** it comprises:
- A registering unit (61) for sending a subscribe message to the Application Server for registering to an IMS-based service;
- A notification receiving unit (62) for receiving a notification from the Application Server of other UEs registered to said IMS-based service under the same IMS subscription;
- A session push unit (63) for sending session push information to the Application Server, to be forwarded to a selected UE of said other registered UEs, the session push information comprising the identity of said selected UE and a content identifier associated with a media session belonging to said IMS-based service.

14. A UE according to claim 13, further provided with a selection device for displaying the other UEs registered to said IMS-based service, and for receiving a user input for selecting one of said registered UEs as a target for a session push.

15. A UE according to claim 13 or 14, wherein the media session is an IPTV session, and said content identifier corresponds to the identity of a television channel.

16. A UE according to claim 13 or 14, wherein said content identifier corresponds to an identity of a Video-on-Demand or a Content-on-Demand.

17. A UE according to claim 16, wherein said s session push information comprises information related to a position in the media session.

18. A UE according to any of the claims 13 - 17, wherein said session push information further comprises codec information.

19. An Application Server (70) arranged to enable a selected User Equipment, UE, to initiate an IP Multimedia Subsystem, IMS-based media session, using session push information from a first UE, said media session controlled by the Application Server via an IMS Gateway, and belonging to an IMS-based service, the Application server **characterized in that** it comprises:
- A registering receiving unit (71) for receiving a subscribe message from the first UE for registering said first UE to an IMS-based service;
- A notification unit (72) for sending a notification to the first UE of the other UEs that are registered to said IMS-based service under the same IMS subscription;
- A session push forwarding unit (73) for receiving session push information from the first UE, said session push information comprising the identity of a selected UE of the other registered UEs, and a content identifier associated with a media session belonging to said IMS-based service, the unit further arranged to forward said session push information to said selected UE.

20. An Application Server according to claim 19, wherein the media session is an IPTV session, and said content identifier corresponds to the identity of a television channel.

21. An Application Server according to claim 20, wherein said content identifier corresponds to an identity of a Video-on-Demand or a Content-on-Demand.

22. An Application Server according to claim 21, wherein said session push information further comprises information related to the position in the media session.

23. An Application Server according to any of the claims 19 - 22, wherein said session push information further comprises codec information.

## Patentansprüche

1. Verfahren für eine erste Benutzereinrichtung UE (11, 60) zum Befähigen einer ausgewählten UE (13), eine IMS (IP Multimedia Subsystem)-basierte Mediensitzung einzuleiten, wobei die Mediensitzung durch einen Anwendungsserver (12, 70) über ein IMS-Gateway (15) gesteuert wird und zu einem IMS-basierten Dienst gehört, wobei das Verfahren **dadurch gekennzeichnet ist, dass** die erste UE die folgenden Schritte ausführt:
- Senden (41) einer Subskriptionsnachricht an den Anwendungsserver (12) zum Anmelden für den IMS-basierten Dienst;
- Empfangen (42) einer Benachrichtigung vom Anwendungsserver der anderen UEs, die für den IMS-basierten Dienst unter der gleichen IMS-Subskription angemeldet sind;
- Senden (44) von Sitzungs-Push-Informationen an den Anwendungsserver, die an eine ausgewählte (43) UE der angemeldeten UEs weitergeleitet werden sollen, wobei die Sitzungs-Push-Informationen die Identität der ausgewählten UE und eine Inhaltskennung umfassen, die einer Mediensitzung zugeordnet ist, die zum IMS-basierten Dienst gehört.

2. Verfahren nach Anspruch 1, **dadurch gekennzeichnet, dass** die erste UE (11) die folgenden zusätzlichen Schritte ausführt:
- Anzeigen der anderen UEs, die für den gleichen IMS-basierten Dienst angemeldet sind;
- Empfangen einer Benutzereingabe, die eine der anderen angemeldeten UEs auswählt.

3. Verfahren nach Anspruch 1 oder 2, wobei die Mediensitzung eine IPTV-Sitzung ist, und die Inhaltskennung der Identität eines Fernsehkanals entspricht.

4. Verfahren nach Anspruch 1 oder 2, wobei die Inhaltskennung einer Identität eines Videos auf Abruf oder eines Inhalts auf Abruf entspricht.

5. Verfahren nach Anspruch 4, wobei die Sitzungs-Push-Informationen ferner Informationen in Bezug auf eine Position in der Mediensitzung umfassen.

6. Verfahren nach einem der vorhergehenden Ansprüche, wobei die Sitzungs-Push-Informationen ferner Codec-Informationen umfassen.

7. Verfahren für einen Anwendungsserver (12, 70) zum Befähigen einer ausgewählten Benutzereinrichtung UE (13), eine IMS (IP Multimedia Subsystem)-basierte Mediensitzung unter Verwendung von Sitzungs-Push-Informationen von einer ersten UE (11, 60) einzuleiten, wobei die Mediensitzung durch den Anwendungsserver (12) über ein IMS-Gateway (15) gesteuert wird und zu einem IMS-basierten Dienst gehört, wobei das Verfahren **dadurch gekennzeichnet ist, dass** der Anwendungsserver die folgenden Schritte ausführt:
- Empfangen (51) einer Subskriptionsnachricht von der ersten UE (11) zum Anmelden der ersten UE für einen IMS-basierten Dienst;
- Senden (52) einer Benachrichtigung an die erste UE der anderen UEs, die für den IMS-basierten Dienst unter der gleichen IMS-Subskription angemeldet sind;
- Empfangen (53) von Sitzungs-Push-Informationen von der ersten UE, wobei die Sitzungs-Push-Informationen die Identität einer ausgewählten UE (13) der anderen angemeldeten UEs und eine Inhaltskennung umfassen, die einer Mediensitzung zugeordnet ist, die zum IMS-basierten Dienst gehört; und
- Weiterleiten (54) der Sitzungs-Push-Informationen an die ausgewählte UE.

8. Verfahren nach Anspruch 7, wobei die Sitzungs-Push-Informationen an die ausgewählte UE durch ein Verzweigen der Informationen zu allen angemeldeten UEs für jede UE weitergeleitet werden, um zu prüfen, ob sie ein vorgesehener Empfänger ist oder nicht.

9. Verfahren nach Anspruch 7 oder 8, wobei die Mediensitzung eine IPTV-Sitzung ist, und die Inhaltskennung der Identität eines Fernsehkanals entspricht.

10. Verfahren nach Anspruch 7 oder 8, wobei die Inhaltskennung einer Identität eines Videos auf Abruf oder eines Inhalts auf Abruf entspricht.

11. Verfahren nach Anspruch 10, wobei die Sitzungs-Push-Informationen ferner Informationen in Bezug auf eine Position in der Mediensitzung umfassen.

12. Verfahren nach einem der Ansprüche 7 bis 11, wobei die Sitzungs-Push-Informationen ferner Codec-Informationen umfassen.

13. Benutzereinrichtung UE (60), die so ausgelegt ist, dass sie eine ausgewählte UE (13) befähigt, eine IMS (IP Multimedia Subsystem)-basierte Mediensitzung einzuleiten, wobei die Mediensitzung durch einen Anwendungsserver (12, 70) über ein IMS-Gateway (15) gesteuert wird und zu einem IMS-basierten Dienst gehört, wobei die UE **dadurch gekennzeichnet ist, dass** sie umfasst:
- eine Anmeldeeinheit (61) zum Senden einer Subskriptionsnachricht an den Anwendungsserver zum Anmelden für einen IMS-basierten Dienst;
- eine Benachrichtigungsempfangseinheit (62) zum Empfangen einer Benachrichtigung vom Anwendungsserver der anderen UEs, die für den IMS-basierten Dienst unter der gleichen IMS-Subskription angemeldet sind;
- eine Sitzungs-Push-Einheit (63) zum Senden von Sitzung-Push-Informationen an den Anwendungsserver, die an eine ausgewählte UE der anderen angemeldeten UEs weitergeleitet werden sollen, wobei die Sitzungs-Push-Informationen die Identität der ausgewählten UE und eine Inhaltskennung umfassen, die einer Mediensitzung zugeordnet ist, die zum IMS-basierten Dienst gehört.

14. UE nach Anspruch 13, die ferner mit einer Auswahlvorrichtung zum Anzeigen der anderen UEs, die für den IMS-basierten Dienst angemeldet sind, und zum Empfangen einer Benutzereingabe zum Auswählen einer der angemeldeten UEs als ein Ziel für einen Sitzungs-Push versehen ist.

15. UE nach Anspruch 13 oder 14, wobei die Mediensitzung eine IPTV-Sitzung ist, und die Inhaltskennung der Identität eines Fernsehkanals entspricht.

16. UE nach Anspruch 13 oder 14, wobei die Inhaltskennung einer Identität eines Videos auf Abruf oder eines Inhalts auf Abruf entspricht.

17. UE nach Anspruch 16, wobei die Sitzungs-Push-Informationen ferner Informationen in Bezug auf eine Position in der Mediensitzung umfassen.

18. UE nach einem der Ansprüche 13 bis 17, wobei die Sitzungs-Push-Informationen ferner Codec-Informationen umfassen.

19. Anwendungsserver (70), der so ausgelegt ist, dass er eine ausgewählte Benutzereinrichtung UE (13) befähigt, eine IMS (IP Multimedia Subsystem)-basierte Mediensitzung unter Verwendung von Sitzungs-Push-Informationen von einer ersten UE einzuleiten, wobei die Mediensitzung durch den Anwendungsserver über ein IMS-Gateway gesteuert wird und zu einem IMS-basierten Dienst gehört, wobei der Anwendungsserver **dadurch gekennzeichnet ist, dass** er umfasst:
- Anmeldungsempfangseinheit (71) zum Empfangen einer Subskriptionsnachricht von der ersten UE zum Anmelden der ersten UE für einen IMS-basierten Dienst;
- eine Benachrichtigungseinheit (72) zum Senden einer Benachrichtigung an die erste UE der anderen UEs, die für den IMS-basierten Dienst unter der gleichen IMS-Subskription angemeldet sind;
- eine Sitzungs-Push-Weiterleiteinheit (73) zum Empfangen von Sitzungs-Push-Informationen von der ersten UE, wobei die Sitzungs-Push-Informationen die Identität einer ausgewählten UE der anderen angemeldeten UEs und eine Inhaltskennung umfassen, die einer Mediensitzung zugeordnet ist, die zum IMS-basierten Dienst gehört, wobei die Einheit ferner so ausgelegt ist, dass sie die Sitzungs-Push-Informationen an die ausgewählte UE weiterleitet.

20. Anwendungsserver nach Anspruch 19, wobei die Mediensitzung eine IPTV-Sitzung ist, und die Inhaltskennung der Identität eines Fernsehkanals entspricht.

21. Anwendungsserver nach Anspruch 20, wobei die Inhaltskennung einer Identität eines Videos auf Abruf oder eines Inhalts auf Abruf entspricht.

22. Anwendungsserver nach Anspruch 21, wobei die Sitzungs-Push-Informationen ferner Informationen in Bezug auf eine Position in der Mediensitzung umfassen.

23. Anwendungsserver nach einem der Ansprüche 19 bis 22, wobei die Sitzungs-Push-Informationen ferner Codec-Informationen umfassen.

## Revendications

1. Procédé pour un premier équipement d'utilisateur UE (11,60) d'activation d'un UE sélectionné (13) pour amorcer une session média basée sur sous-système multimédia IP, IMS, ladite session média étant commandée par un serveur d'application (12,70) via une passerelle IMS (15) et appartenant à u service basé sur IMS, le procédé étant **caractérisé en ce que** le premier UE effectue les étapes suivantes :
- envoyer (41) un message d'abonnement au serveur d'application (12) à des fins d'enregistrement au service basé sur IMS ;
- recevoir (42) une notification provenant du serveur d'application des autres UEs qui sont enregistrés au service basé sur IMS sous le même abonnement IMS ;
- envoyer (44) une information de push de session au service d'application à acheminer vers un UE sélectionné (43) desdites autres UEs enregistrés, l'information de push de session comprenant l'identité dudit UE sélectionné, et un identifiant de contenu associé à une session média appartenant audit service basé sur IMS.

2. Procédé selon la revendication 1, **caractérisé par** le premier UE (11) effectuant les étapes additionnelles suivantes :
- afficher les autres UEs enregistrés au même service basé sur IMS ;
- recevoir une entrée d'utilisateur sélectionnant un desdits autres UEs enregistrés.

3. Procédé selon les revendication 1 ou 2, dans lequel la session média est une session IPTV, et ledit identifiant de contenu correspond à l'identité d'un canal de télévision.

4. Procédé selon les revendications 1 ou 2, dans lequel ledit identifiant de contenu correspond à une identité d'une vidéo à la demande ou un contenu à la demande.

5. Procédé selon la revendication 4, dans lequel ladite information de push de session comprend en outre une information relative à une position dans la session média.

6. Procédé selon une quelconque des revendications précédentes, dans lequel ladite information de push de session comprend en outre une information de codec.

7. Procédé pour serveur d'application (12,70) d'activation d'un équipement d'utilisateur UE sélectionné (13) afin d'amorcer une session média basée sur sous-système multimédia IP IMS, en utilisant une information de push de session provenant d'un premier UE (11,60), ladite session média étant commandée par le serveur d'application (12) via une passerelle IMS (15) et appartenant à un service basé sur IMS,le procédé étant **caractérisé par** le serveur d'application effectuant les étapes suivantes :
- recevoir (51) un message d'abonnement provenant du premier UE (11) pour enregistrer ledit premier UE à un service basé sur IMS ;
- envoyer (52) une notification au premier UE des autres UEs qui sont enregistrés audit service basé sur IMS sous le même abonnement IMS ;
- recevoir (53) une information du push de session provenant du premier UE, l'information de push de session comprenant l'identité d'un UE sélectionné (13) desdits autres UEs enregistrés, et un identifiant de contenu associé à une session média appartenant audit service basé sur IMS ; et
- acheminer (54) ladite information de push de session vers l'UE sélectionné.

8. Procédé selon la revendication 7, dans lequel l'information de push de session est acheminée vers l'UE sélectionné par un partage dynamique de l'information avec tous les UEs enregistrés, afin que chaque UE vérifie si il est un destinataire prévu ou non.

9. Procédé selon les revendications 7 ou 8, dans lequel la session média est une session IPTV, et ledit identifiant de contenu correspond à l'identité d'un canal de télévision.

10. Procédé selon les revendications 7 ou 8, dans lequel ledit identifiant de contenu correspond à une identité d'une vidéo à la demande ou un contenu à la demande.

11. Procédé selon la revendication 10, dans lequel ladite information de push de session comprend en outre une information relative à une position dans la session média.

12. Procédé selon une quelconque des revendications 7 à 11, dans lequel ladite information de push de session comprend en outre une information de codec.

13. Equipement d'utilisateur, UE, (60) agencé afin d'activer un UE sélectionné pour amorcer une session média basée sur IMS, ladite session média étant commandée par un serveur d'application (70) via une passerelle IMS, et appartenant à un service basé sur IMS, l'UE étant **caractérisé en ce qu'**il comprend :
- une unité d'enregistrement (61) pour envoyer un message d'abonnement au serveur d'application à des fins d'enregistrement au service basé sur IMS ;
- une unité de réception de notification (62) pour recevoir une notification provenant du serveur d'application d'autres UEs enregistrés audit service basé sur IMS sous le même abonnement IMS ;
- une unité de push de session (63) pour envoyer une information de push de session au serveur d'application, à acheminer vers un UE sélectionné desdits autres UEsenregistrés, l'information de push de session comprenant l'identité dudit UE sélectionné et un identifiant de contenu associé à une session média appartenant audit service basé sur IMS.

14. UE selon la revendication 13, pourvu en outre d'un dispositif de sélection pour afficher les autres UEs enregistrés audit service basé sur IMS, et pour recevoir une entrée d'utilisateur pour sélectionner un desdits UEsenrgeistrés comme une cible d'un push de session.

15. UE selon les revendications 13 ou 14, dans lequel la session média est une session IPTV, et ledit identifiant de contenu correspond à l'identité d'un canald e télévision.

16. UE selon les revendications 13 ou 14, dans lequel ledit identifiant de contenu correspond à une identité d'une vidéo à la demande ou un contenu à la demande.

17. UE selon la revendication 16, dans lequel une information de push de session comprend une information relative à une position dans la session média.

18. UE selon une quelconque des revendications 13 à 17, dans lequel ladite information de push de session comprend en outre une information de codec.

19. Serveur d'application (70) agencé afin d'activer un équipement d'utilisateur UE sélectionné, pour amorcer une session média basée sur sous-système multimédia IP IMS, en utilisant une information de push de session provenant d'un premier UE, ladite session média étant commandée par le serveur d'application via une passerelle IMS, et appartenant à un service basé sur IMS, le serveur d'application étant **caractérisé en ce qu'**il comprend :
- une unité de réception d'enregistrement (71) pour recevoir un message d'abonnement provenant du premier UE pour enregistrer ledit premier UE à un service basé sur IMS ;
- une unité de notification (72) pour envoyer une notification au premier UE des autres UEs qui sont enregistrés audit service basé sur IMS sous le même abonnement IMS ;
- une unité d'acheminement de push de session (73) pour recevoir une information de push de session provenant du premier UE, ladite information de push de session comprenant l'identité d'un UE sélectionné des autres UEs enregistrés, et un identifiant de contenu associé à une session média appartenant audit service basé sur IMS, l'unité étant en outre agencée afin d'acheminer ladite information de push de session vers ledit UE sélectionné.

20. Serveur d'application selon la revendication 19, dans lequel la session média est une session IPTV, et ledit identifiant de contenu correspond à l'identité d'un canal de télévision.

21. Serveur d'application selon la revendication 20, dans lequel ledit identifiant de contenu correspond à une identité d'une vidéo à la demande ou d'un contenu à la demande.

22. Serveur d'application selon la revendication 21, dans lequel ladite information de push de session comprend en outre une information relative à la position dans la session média.

23. Serveur d'application selon une quelconque des revendications 19 à 22, dans lequel ladite information de push de session comprend en outre une information de codec.
